# EUROPEAN PATENT APPLICATION

(11) **EP 4 383 934 A1**
(43) Date of publication of application: **12.06.2024**
(21) Application number: 22853561.3
(22) Date of filing: 05.08.2022
(51) Int. Cl.: H04W 76/28, H04W 76/14, H04W 72/04, H04W 4/06, H04W 72/12, H04W 4/40, H04W 92/18

(54) **METHOD AND DEVICE FOR SETTING COMMON SL DRX CONFIGURATION FOR PC5 UNICAST IN NR V2X**

(30) Priority: 05.08.2021 US 202163229562 P; 05.08.2021 US 202163230020 P
(71) Applicant: LG Electronics Inc., Yeongdeungpo-gu Seoul 07336 (KR)
(72) Inventor: PARK, Giwon, Seoul 06772 (KR); BACK, Seoyoung, Seoul 06772 (KR); LEE, Seungmin, Seoul 06772 (KR); HONG, Jongwoo, Seoul 06772 (KR)
(74) Representative: Plasseraud IP
(86) International application number: PCT/KR2022/011694
(87) International publication number: WO 2023/014186

(57) **Abstract**

Proposed is a method for operating a first device (100) in a wireless communication system. The method may comprise the steps of: obtaining information related to at least one SL DRX configuration which is set for each piece of service-related information; determining a first SL DRX configuration for receiving a message for establishing a unicast connection, on the basis of information related to a first service, from among the at least one SL DRX configuration; receiving, on the basis of an active time of the first SL DRX configuration, a first SCI for PSSCH scheduling through a PSCCH from a second device; and receiving, on the basis of the active time, a message for establishing the unicast connection and a second SCI through the PSSCH from the second device.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL SOLUTION

According to an embodiment of the present disclosure, a method for performing, by a first device, wireless communication may be proposed. For example, the method may comprise: obtaining information related to at least one sidelink, SL, discontinuous reception, DRX, configuration; determining a first SL DRX configuration for a reception of a message for establishing a unicast connection, based on information related to a first service, among the at least one SL DRX configuration; receiving, from a second device, first sidelink control information, SCI, for scheduling of a physical sidelink shared channel, PSSCH, through a physical sidelink control channel, PSCCH, based on an active time of the first SL DRX configuration; and receiving, from the second device, the message for establishing the unicast connection and second SCI through the PSSCH, based on the active time, wherein the at least one SL DRX configuration may be configured for each information related to a unicast service.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain information related to at least one sidelink, SL, discontinuous reception, DRX, configuration; determine a first SL DRX configuration for a reception of a message for establishing a unicast connection, based on information related to a first service, among the at least one SL DRX configuration; receive, from a second device, first sidelink control information, SCI, for scheduling of a physical sidelink shared channel, PSSCH, through a physical sidelink control channel, PSCCH, based on an active time of the first SL DRX configuration; and receive, from the second device, the message for establishing the unicast connection and second SCI through the PSSCH, based on the active time, wherein the at least one SL DRX configuration may be configured for each information related to a unicast service.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain information related to at least one sidelink, SL, discontinuous reception, DRX, configuration; determine a first SL DRX configuration for a reception of a message for establishing a unicast connection, based on information related to a first service, among the at least one SL DRX configuration; receive, from a second UE, first sidelink control information, SCI, for scheduling of a physical sidelink shared channel, PSSCH, through a physical sidelink control channel, PSCCH, based on an active time of the first SL DRX configuration; and receive, from the second UE, the message for establishing the unicast connection and second SCI through the PSSCH, based on the active time, wherein the at least one SL DRX configuration may be configured for each information related to a unicast service.

According to an embodiment of the present disclosure, a non-transitory computer-readable storage medium storing instructions may be proposed. For example, the instructions, when executed, may cause a first device to: obtain information related to at least one sidelink, SL, discontinuous reception, DRX, configuration; determine a first SL DRX configuration for a reception of a message for establishing a unicast connection, based on information related to a first service, among the at least one SL DRX configuration; receive, from a second device, first sidelink control information, SCI, for scheduling of a physical sidelink shared channel, PSSCH, through a physical sidelink control channel, PSCCH, based on an active time of the first SL DRX configuration; and receive, from the second device, the message for establishing the unicast connection and second SCI through the PSSCH, based on the active time, wherein the at least one SL DRX configuration may be configured for each information related to a unicast service.

According to an embodiment of the present disclosure, a method for performing, by a second device, wireless communication may be proposed. For example, the method may comprise: obtaining information related to at least one sidelink, SL, discontinuous reception, DRX, configuration; generating a medium access control, MAC, protocol data unit, PDU, related to a first service; generating a message for establishing a unicast connection; determining a first SL DRX configuration for at least one device to receive the message for establishing the unicast connection among the at least one SL DRX configuration, based on information related to the first service; transmitting first sidelink control information, SCI, for scheduling of a physical sidelink shared channel, PSSCH, through a physical sidelink control channel, PSCCH, based on an active time of the first SL DRX configuration; and transmitting, the message for establishing the unicast connection and second SCI through the PSSCH, based on the active time, wherein the at least one SL DRX configuration may be configured for each information related to a unicast service.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain information related to at least one sidelink, SL, discontinuous reception, DRX, configuration; generate a medium access control, MAC, protocol data unit, PDU, related to a first service; generate a message for establishing a unicast connection; determine a first SL DRX configuration for at least one device to receive the message for establishing the unicast connection among the at least one SL DRX configuration, based on information related to the first service; transmit first sidelink control information, SCI, for scheduling of a physical sidelink shared channel, PSSCH, through a physical sidelink control channel, PSCCH, based on an active time of the first SL DRX configuration; and transmit, the message for establishing the unicast connection and second SCI through the PSSCH, based on the active time, wherein the at least one SL DRX configuration may be configured for each information related to a unicast service.

### ADVANTAGEOUS EFFECTS

A UE can efficiently perform sidelink communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an embodiment of a configuring of a default/common SL DRX configuration, according to one embodiment of the present disclosure.
FIG. 9 shows a procedure where a transmitting UE and a receiving UE establish a unicast connection, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, `when, if, or in case of' may be replaced with `based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

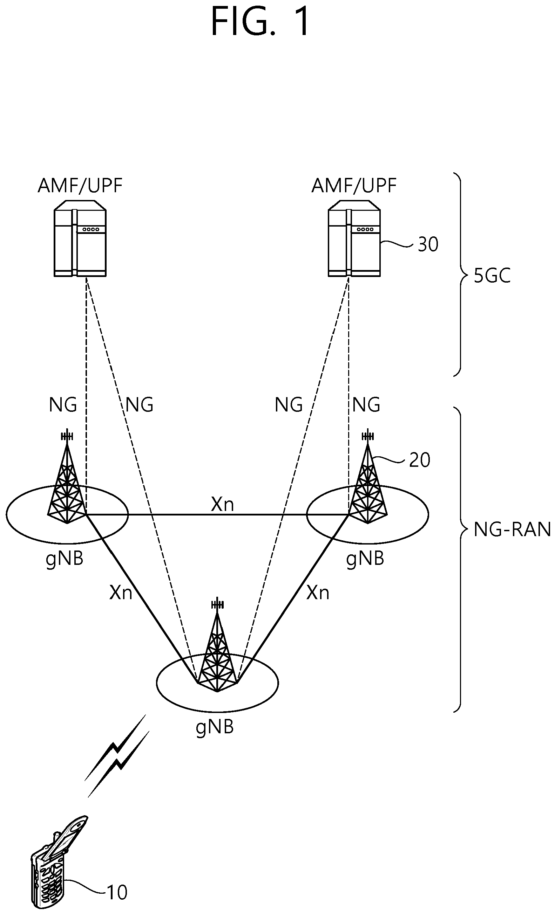

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

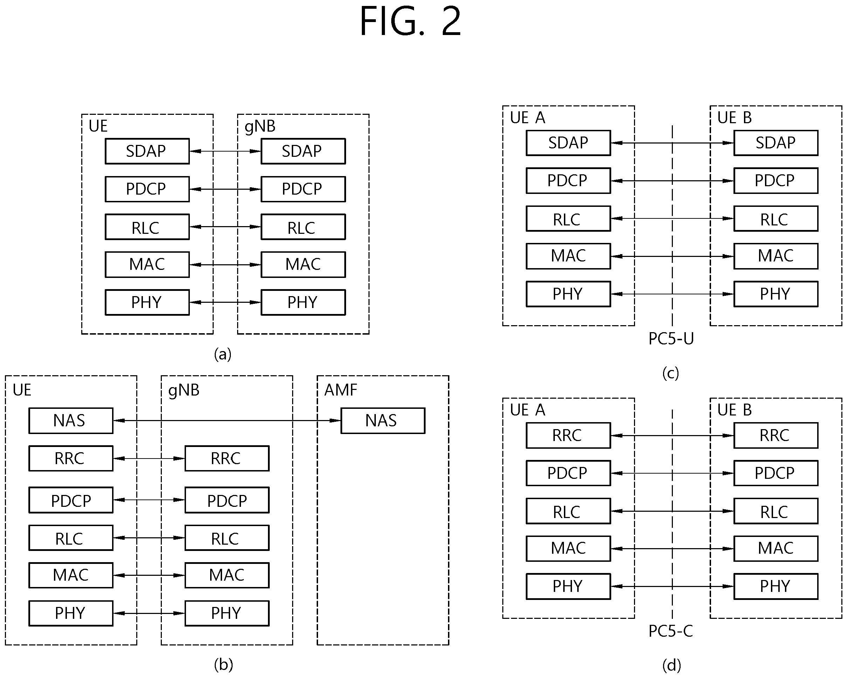

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

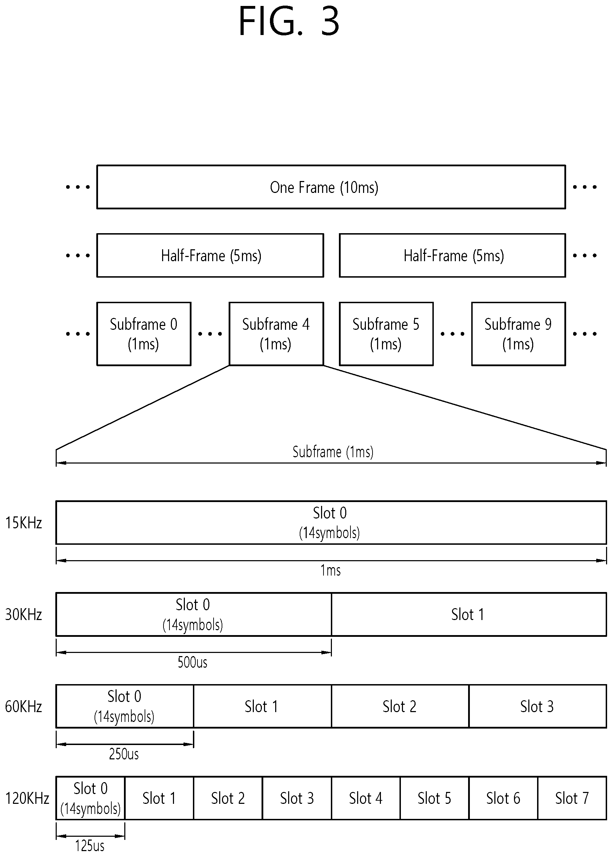

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

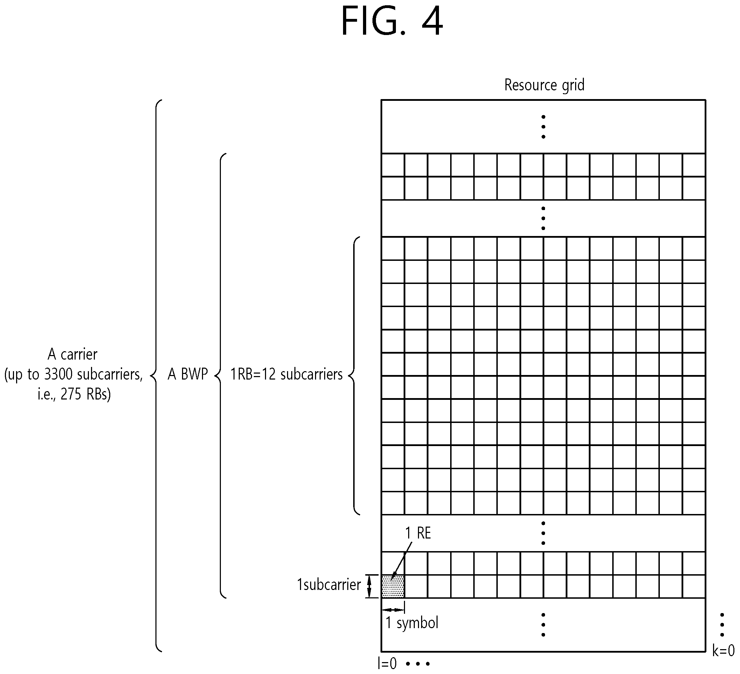

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

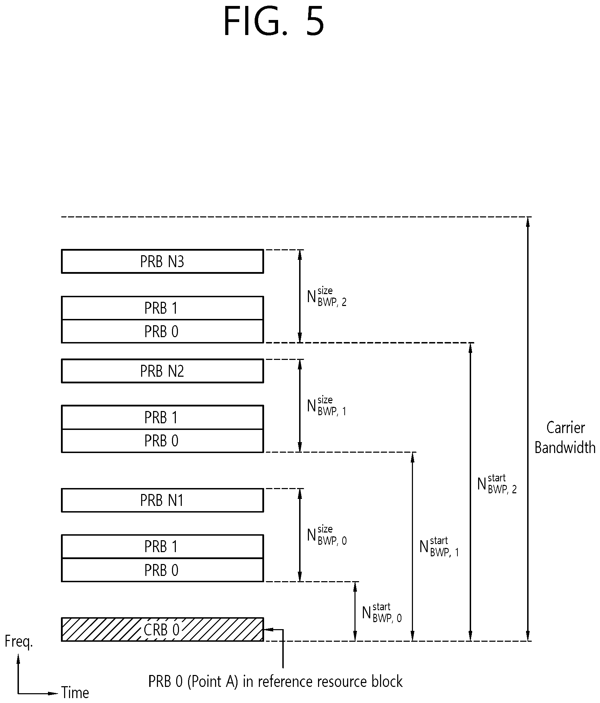

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

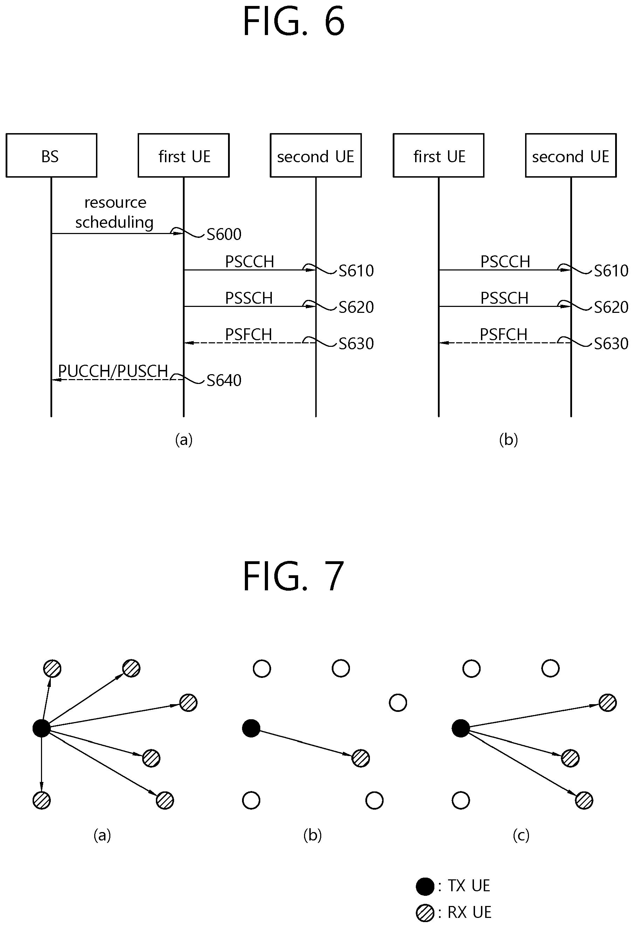

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2^{nd}-stage SCI format field | 2^{nd}-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.

In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

Referring to the standard document, some procedures and technical specifications related to this disclosure are shown in below.

**[Table 8]**

| 3GPP TS 38.321 V16.2.1 | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | - *drx-onDurationTimer*: the duration at the beginning of a DRX cycle; |
| | - *drx-SlotOffset:* the delay before starting the *drx-onDurationTimer*; |
| | - *drx-InactivityTimer*: the duration after the PDCCH occasion in which a PDCCH indicates a new UL or DL transmission for the MAC entity; |
| | - *drx-RetransmissionTimerDL* (per DL HARQ process except for the broadcast process): the maximum duration until a DL retransmission is received; |
| | - *drx-RetransmissionTimerUL* (per UL HARQ process): the maximum duration until a grant for UL retransmission is received; |
| | - *drx-LongCycleStartOffset:* the Long DRX cycle and *drx-StartOffset* which defines the subframe where the Long and Short DRX cycle starts; |
| | - *drx-ShortCycle* (optional): the Short DRX cycle; |
| | - *drx-ShortCycleTimer* (optional): the duration the UE shall follow the Short DRX cycle; |
| | - *drx-HARQ-RTT-TimerDL* (per DL HARQ process except for the broadcast process): the minimum duration before a DL assignment for HARQ retransmission is expected by the MAC entity; |
| | - *drx-HARQ-RTT-TimerUL* (per UL HARQ process): the minimum duration before a UL HARQ retransmission grant is expected by the MAC entity; |
| | - *ps-Wakeup* (optional): the configuration to start associated *drx-onDurationTimer* in case DCP is monitored but not detected; |
| | - *ps-TransmitOtherPeriodicCSI* (optional): the configuration to report periodic CSI that is not Ll-RSRP on PUCCH during the time duration indicated by *drx-onDurationTimer* in case DCP is configured but associated *drx-onDurationTimer* is not started; |
| | - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* | |

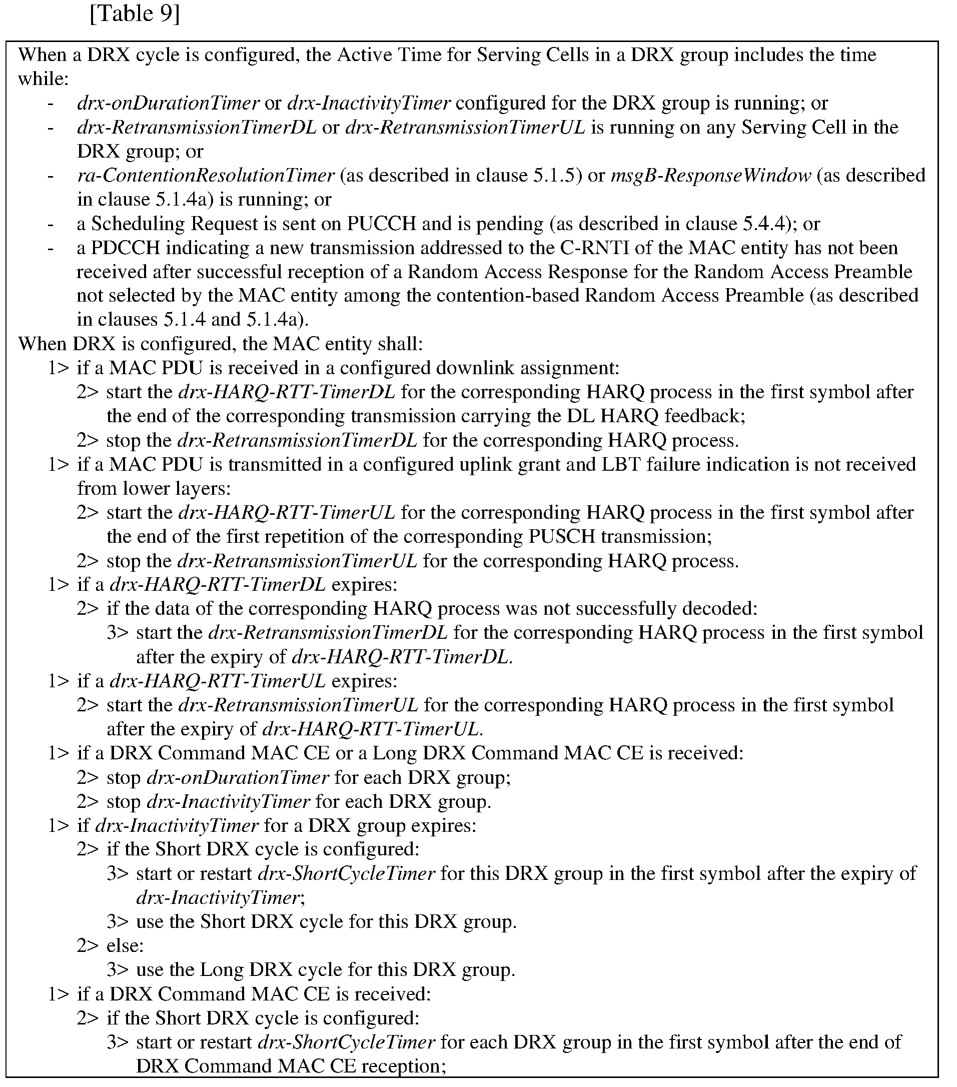

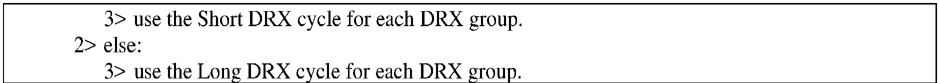

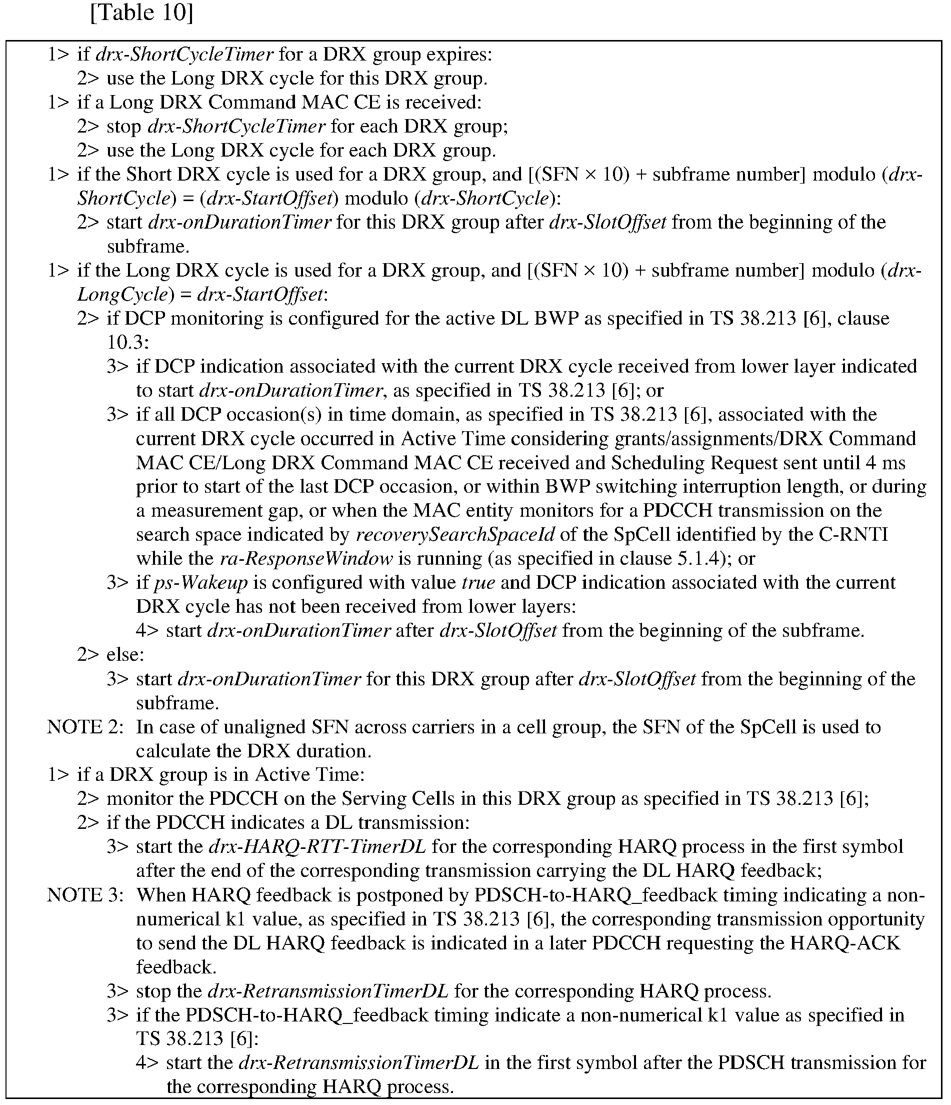

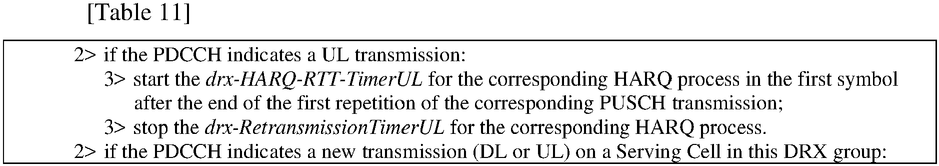

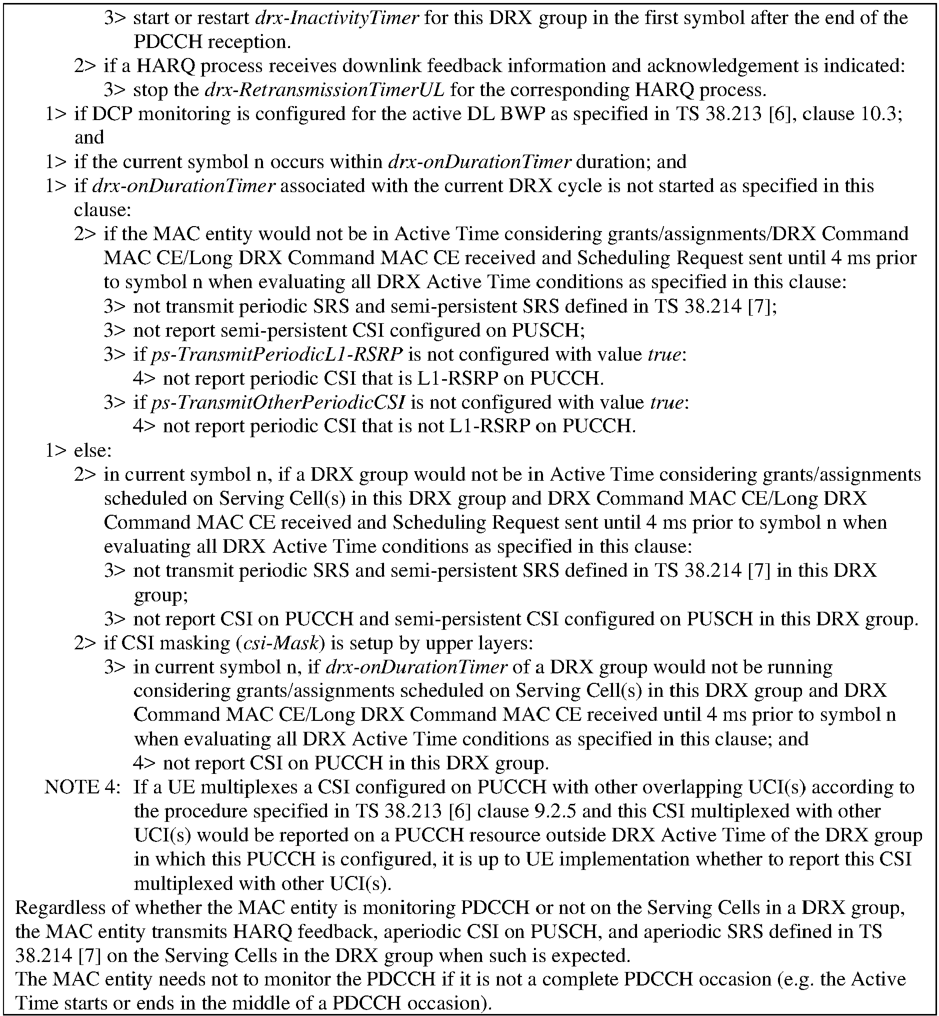

NR V2X in Release 16 did not support power saving operations for UEs, and Release 17 NR V2X will support power saving operations for UEs (e.g., pedestrian UEs).

For example, an SL DRX configuration for power saving operation of a UE (e.g., SL DRX operation) may need to be defined.

Thus, in an embodiment(s) of the present disclosure, an SL DRX configuration for a power saving operation of a UE is defined, and a method is proposed for enabling a UE to smoothly perform an SL DRX operation using the defined SL DRX configuration. In the following description, "when, if, in case of" may be replaced with "based on".

According to one embodiment of the present disclosure, (Proposal 1.) a method is proposed for performing an SL DRX operation using a common SL DRX configuration by defining one default/common SL DRX configuration based on the QoS requirements (e.g., PC5 QoS flow identifier (PCI), packet delay budget (PDB)) of a V2X service or SL service, so that a UE may perform the SL DRX operation using the common SL DRX configuration.

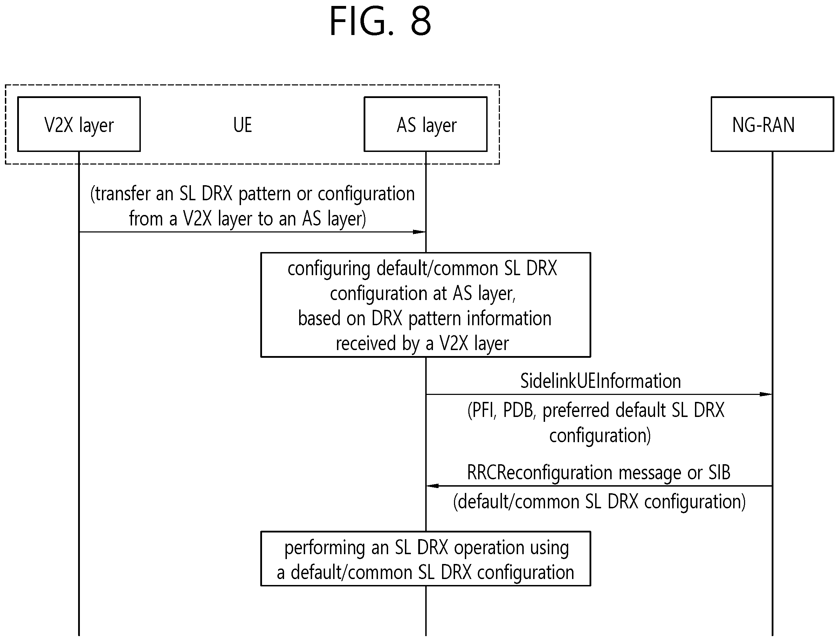

FIG. 8 shows an embodiment of a configuring of a default/common SL DRX configuration, according to one embodiment of the present disclosure. The embodiment of FIG. 8 may be combined with various embodiments of the present disclosure.

Referring to FIG. 8, an embodiment of configuring one default/common SL DRX configuration for a UE based on QoS requirements (e.g., PQI, PDB) of a V2X service or SL service is shown. First, (step 1) a V2X layer of a UE may generate and deliver to the AS layer an SL DRX pattern (e.g., SL DRX cycle, SL DRX on-duration) information for an SL DRX operation of the UE based on the QoS requirements (e.g., PDB) of a V2X service generated by the application layer, or may generate and deliver to the AS layer an SL DRX configuration.

**[Table 12]**

| | ● Sidelink DRX configurations |
|---|---|
| ✔ | *SL drx-onDurationTimer: the duration at the beginning of a DRX Cycle;* |
| ✔ | *SL drx-SlotOffset: the delay before starting the drx-onDurationTimer;* |
| ✔ | *SL drx-InactivityTimer: the duration after the PSCCH occasion in which a PSCCH indicates a new SL transmission for the MAC entity;* |
| ✔ | *SL drx-RetransmissionTimer (per HARQ process): the maximum duration until a retransmission is received;* |
| ✔ | *SL drx-LongCycleStartOffset: the Long DRX cycle and drx-StartOffset which defines the subframe where the Long and Short DRX Cycle starts;* |
| ✔ | *SL drx-ShortCycle (optional): the Short DRX cycle;* |
| ✔ | *SL drx-ShortCycleTimer (optional): the duration the UE shall follow the Short DRX cycle; SL drx-HARQ-RTT-Timer (per HARQ process): the minimum duration before an assignment for HARQ retransmission is expected by the MAC entity.* |

And (step 2) the AS layer of the UE may generate a default/common SL DRX configuration based on the SL DRX pattern information ("SL DRX cycle and SL DRX on-duration length" or "SL DRX on-duration length and SL DRX off-duration length") received from the V2X layer, and use it for SL DRX operation.

Then, (step 3) the UE may deliver the QoS requirement information (PFI, PDB) for the V2X service of the UE and the preferred default/common SL DRX configuration to a base station. For example, if steps 1 and 2 are omitted, only the QoS requirement information for the V2X service may be delivered to the base station, and the base station may generate and inform UEs of the common SL DRX configuration information to be used by the UEs based on that information.

Then, (step 4) the UE can perform an SL DRX operation and sidelink transmission/reception using the common SL DRX configuration received from the base station.

According to one embodiment of the present disclosure (Proposal 2.), if only one default/common SL DRX configuration is allowed based on the QoS requirements (e.g., PQI, PDB) of the V2X service or SL service, a problem may arise in that the probability of resource collision between different UEs in the SL DRX on-duration interval of the SL DRX configuration, and the level of congestion/interference may increase. Therefore, a method for reducing the probability of resource collision between different UEs in the SL DRX on-duration interval of a common SL DRX configuration is proposed in this disclosure as follows.

According to one embodiment of the present disclosure, (Proposal 2. 1) by defining a wake up starting time point (SL DRX on-duration starting time point) or a wake up duration (SL DRX on-duration length) of a period that a wake up interval of a common SL DRX configuration (e.g., SL DRX on-duration) is repeated (common SL DRX cycle) to be hopped/randomized based on parameters such as application/service ID (and/or (Layer 1 or Layer 2) (source/destination) ID), the probability of resource conflicts between different UEs operating SL DRX may be reduced.

According to one embodiment of the present disclosure, (Proposal 2. 2) a plurality of common SL DRX configurations may be allowed specifically for a V2X or SL service/QoS, but one of them may be randomly selected (or selected by UE implementation), or a common SL DRX configuration with a relatively low interference level may be preferentially selected (or one of the common SL DRX configurations below a pre-configured service/QoS-specific threshold value may be randomly selected), based on interference levels, etc., measured (in the past), in a received slot related to a wake-up interval (e.g., common SL DRX on-duration) of the common SL DRX configuration.

According to one embodiment of the present disclosure (Proposal 3), in addition to randomizing the default/common SL DRX configuration (or, default/common SL DRX pattern) or the SL DRX-related parameters included in the default/common SL DRX configuration, if the conditions described in the proposal (e.g., a situation where the resource collision probability between different UEs, the degree of congestion/interference increases, the resource collision probability between different UEs exceeds a threshold value, or the degree of congestion/interference between different UEs exceeds a threshold value) are satisfied, a UE may increase an SL DRX on-duration (or active time interval) or cause an SL DRX timer value configured separately in advance (e.g., a relatively large value) to be applied (e.g., the SL DRX timers included in an SL DRX configuration referred to in this disclosure, or other SL DRX-related timers defined to support SL DRX operation). (i.e., in the form of increasing the time domain of candidate resources, for example, to select resources with less interference).

According to one embodiment of the present disclosure (Proposal 4), when switching from a selected default/common SL DRX configuration (or, default/common SL DRX pattern) or SL DRX-related parameter included in the default/common SL DRX configuration to another default/common SL DRX configuration (or, default/common SL DRX pattern) or SL DRX-related parameter included in the default/common SL DRX configuration, a congestion/interference level hysteresis may be configured. For example, a UE may be allowed to switch to a new common SL DRX configuration or common SL DRX pattern or parameters of a common SL DRX configuration only if the difference between the congestion/interference levels in the old and new configuration or in the old and new pattern is greater than a pre-configured hysteresis value and, at the same time, the congestion/interference levels in the new configuration or new pattern are lower than a pre-configured threshold value. Additionally, for example, switching to a different configuration or pattern may be configured to be allowed only when a resource reselection is triggered, or when a TB related retransmission is completed, or when the UE is operating in long DRX operation, or when the UE is operating on an SL on-duration basis due to the expiration of a timer.

According to one embodiment of the present disclosure (Proposal 5), when an SL DRX on-duration or active interval (during which a UE is operating in a wake-up state to receive or transmit sidelink signaling including SL DRX on-duration) related to a higher priority/requirement service overlaps (partially) with an SL DRX on-duration or active interval related to a service of lower priority/requirement, in order to reduce interference to the service of the higher priority/requirement (within that overlapping interval), an upper bound value of the (maximum or minimum or average) transmit power, a (maximum) number of TB-related retransmissions, the Channel occupancy Ratio (CR) value, etc. used for the transmission of the lower priority/requirement service may be configured.

According to one embodiment of the present disclosure (Proposal 6), when the zone region in which a UE is located changes (or when the zone ID in which the UE is located changes), randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

According to one embodiment of this disclosure, (Proposal 7) when a UE changes from in-coverage (INC) to out-of-coverage (OOC) state, or when a UE changes from OOC to INC state, randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

According to one embodiment of the present disclosure (Proposal 8), when the cell ID in which a UE is located changes, randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

According to one embodiment of the present disclosure (Proposal 9), when a UE's carrier type (e.g., licensed carrier, ITS-dedicated carrier) changes, randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

According to one embodiment of the present disclosure (Proposal 10), when a UE's communication type/direction (e.g., V2P, P2P, P2V) changes, randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

According to one embodiment of the present disclosure (Proposal 11), when the amount of remaining battery in a UE changes, randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

According to one embodiment of the present disclosure (Proposal 12), when a UE's V2X (or SL) service ID/type changes, randomization for the selection of a common SL DRX configuration/a common SL DRX pattern/an SL DRX operation parameter and a timer included in a common SL DRX configuration/a configuration, a pattern, and a DRX operation parameter included in the configuration may be triggered or enabled.

In addition, when (default/common) SL DRX pattern/configuration information (e.g., SL DRX cycle, SL DRX on-duration interval information, etc.) is exchanged through higher layer signaling (e.g., MAC CE, PC5 RRC), a mechanism may be required to ensure that UEs have a common understanding of "(default/common) SL DRX pattern/configuration starting time point (e.g., SL DRX on-duration starting time point)".

Thus, according to one embodiment of the present disclosure (Proposal 13), an SL DRX confirmation message (e.g., a message reporting SL DRX pattern/configuration information, or an ACK message to an SL DRX pattern/configuration report message) is defined and a method of considering the time point at which it is received by a UE to be the reference timing (e.g., the start of the SL DRX on-duration), or, signaling information regarding the SL DRX pattern related reference timing through additional higher layer signaling (e.g., SL DRX confirmation message, SIB, DL only RRC message, PC5 RRC message), or considering the time point when the pre-configured/exchanged slot offset value from the SYNC source based DFN 0 is applied as the reference timing, etc. is proposed.

According to one embodiment of the present disclosure, (Proposal 14) a common SL DRX configuration/parameter proposed in the present disclosure may be a DRX configuration that is used in common with all UEs regardless of the cast type (unicast or groupcast or broadcast). Alternatively, for example, a common SL DRX configuration/parameter proposed in this disclosure may be a DRX configuration that is configured for a specific cast type (unicast or groupcast or broadcast). Alternatively, for example, a common SL DRX configuration/parameter proposed in this disclosure may be a DRX configuration commonly used by UEs belonging to (subscribing to) the same groupcast (groupcast service with the same groupcast destination L2 ID) or unicast (unicast with the same pair of a source L2 ID/destination L2 ID) or broadcast (broadcast service with the same broadcast destination L2 ID) service.

Alternatively, for example, a common SL DRX configuration/parameter proposed herein may be a DRX configuration configured for a specific cast type (unicast or groupcast or broadcast). For example, a common SL DRX configuration/parameter proposed in this disclosure may be a DRX configuration commonly used by UEs interested in the same groupcast or the same unicast or the same broadcast service. For example, UEs interested in the same groupcast or same unicast or same broadcast service may be UEs that are not yet subscribed or connected (in the case of unicast) to a service of that cast type and are interested in subscribing to a service of that cast type and are in a state to monitor the signaling of that service. Alternatively, for example, a common SL DRX configuration/parameter proposed in this disclosure may be a UE service specific DRX configuration that UEs use in common.

According to one embodiment of the present disclosure (Proposal 15), a common SL DRX configuration/parameter proposed in the present disclosure may be a DRX configuration that is used in common with all UEs regardless of the cast type (unicast or groupcast or broadcast). Alternatively, for example, a common SL DRX configuration/parameter proposed in this disclosure may be a DRX configuration configured for a specific cast type (unicast or groupcast or broadcast). Alternatively, for example, a common SL DRX configuration/parameter proposed in this disclosure may be a DRX configuration commonly used by UEs belonging to (subscribing to) the same groupcast or the same unicast or the same broadcast service.

Alternatively, for example, a common SL DRX configuration/parameter proposed herein may be a DRX configuration configured for a specific cast type (unicast or groupcast or broadcast). For example, a common SL DRX configuration/parameter proposed in this disclosure may be a common DRX configuration used by UEs interested in the same groupcast or the same unicast or the same broadcast service. For example, UEs interested in the same groupcast or same unicast or same broadcast service may be UEs that are not yet subscribed or connected (in the case of unicast) to a service of that cast type and are interested in subscribing to a service of that cast type and are in a state to monitor the signaling of that service. Alternatively, for example, a common SL DRX configuration/parameter proposed in this disclosure may be a UE service specific DRX configuration that UEs use in common.

According to one embodiment of the present disclosure, the common SL DRX configuration commonly used by UEs or the UE service specific SL DRX configuration commonly used by UEs, as specified in Proposal 15 above, may be configured and set in any combination of the following.

For example, (method 1) a common SL DRX configuration or UE service specific SL DRX configuration may be configured per cast type (unicast service or groupcast service or broadcast service).

For example, (method 2) a common SL DRX configuration or UE service specific SL DRX configuration may be configured per a pair of source/destination (source (L2 or L1 ID)/destination (L2 or L1 ID)).

For example, (method 3) a common SL DRX configuration or UE service specific SL DRX configuration may be configured per service (or PQI or PDB).

For example, (method 4) a common SL DRX configuration or UE service specific SL DRX configuration may be configured per service (or, PS ID (provider service identifier)).

For example, (method 5) a common SL DRX configuration or UE service specific SL DRX configuration may be configured per (or, the combination of) cast type (unicast, or, groupcast, or, broadcast) per service (or, PQI, or, PSID).

For example, (method 6) (in the case of a groupcast or broadcast,) a common SL DRX configuration or a UE service specific SL DRX configuration may be configured per (or in combination of) destination (groupcast ID, or, broadcast ID) per service (or, PQI, or, PSID).

For example, a common SL DRX configuration or a UE service specific SL DRX configuration may be configured per destination L2 ID, since the destination L2 ID may be used as an identifier to differentiate between groupcast/broadcast services, here, for each destination L2 ID, a common SL DRX configuration or a UE service specific SL DRX configuration which reflects the PQI of the SL data may be configured.

For example, (method 7) (in the case of a groupcast or broadcast,) a common SL DRX configuration or a UE service specific SL DRX configuration may be configured per (or in combination of) pair of source/destination (source (L2 or L1 ID)/destination (L2 or L1 ID)) per service (or, PQI, or, PSID).

For example, a common SL DRX configuration or a UE service specific SL DRX configuration may be configured per destination L2 ID, since the destination L2 ID may be used as an identifier to differentiate between groupcast/broadcast services, here, for each pair of source L2 ID/destination L2 ID between UEs receiving a groupcast/broadcast service and a transmitting UE transmitting the groupcast/broadcast service, a common SL DRX configuration or a UE service specific SL DRX configuration which reflects the PQI of the SL data may be configured.

Furthermore, for example, a pair of a source L2 ID/destination L2 ID may be interpreted as follows.

For example, an SL DRX configuration may be DRX configuration information applied by a receiving UE receiving SL data. Thus, from the perspective of the receiving UE, the source L2 ID may be the destination L2 ID of the transmitting UE and the destination L2 ID may be the source L2 ID of the transmitting UE. That is, for example, from the perspective of the receiving UE, an SL DRX configuration may be configured and may be used per source L2 ID/destination L2 ID pair. In addition, for example, a transmitting UE may also perform the role of a receiving UE that receives SL data transmitted by other UEs, like a receiving UE. That is, while the transmitting UE performs the role of a receiving UE, an SL DRX configuration may be configured and used per source L2 ID/destination L2 ID pair. That is, for a pair of a source L2 ID/destination L2 ID, an SL DRX configuration may be configured and used based on the direction of reception/transmission of the SL data (direction from a transmitting UE to a receiving UE, direction from a receiving UE to a transmitting UE).

For example, (method 8) (in the case of unicast) a common SL DRX configuration or a UE service specific SL DRX configuration may be configured per (or, in combination of) a pair of source/destination (source (L2 or L1 ID)/destination (L2 or L1 ID)) per service (or, PQI, or, PSID).

For example, since a pair of a source L2 ID/destination L2 ID may be used as an identifier to distinguish between PC5 unicast links, a UE service specific SL DRX configuration may be configured per PC5 unicast link or PC5 RRC connection (pair of source L2 ID/destination L2 ID), here, a UE service specific SL DRX configuration that reflects the PQI of the SL data exchanged between UEs on the PC5 unicast link or PC5 RRC connection (source L2 ID/destination L2 ID pair) may be configured.

Also, for example, a pair of a source L2 ID/destination L2 ID may be interpreted as follows.

For example, an SL DRX configuration may be DRX configuration information applied by a receiving UE receiving SL data. Thus, from a receiving UE perspective, a source L2 ID may be a destination L2 ID of a transmitting UE and the destination L2 ID may be the source L2 ID of the transmitting UE. that is, for example, an SL DRX configuration may be configured and used per source L2 ID/destination L2 ID pair from a receiving UE perspective. Also, for example, a transmitting UE may perform the role of a receiving UE that receives SL data transmitted by other UEs, like a receiving UE. That is, while the transmitting UE performs the role of a receiving UE, an SL DRX configuration may be configured and used per pair of a source L2 ID/destination L2 ID. That is, for a pair of a source L2 ID/destination L2 ID, an SL DRX configuration may be configured and used according to the direction of reception/transmission of the SL data (from a transmitting UE to a receiving UE, from a receiving UE to a transmitting UE).

Or, for example, (method 9) a common SL DRX configuration or UE service specific SL DRX configuration may be configured as a combination of any two or more of the following: service (PQI, or, PSID), a pair of source/destination (source (L2 or L1 ID)/destination (L2 or L1 ID)), destination L1 or L2 ID, source L1 or L2 ID, cast type (unicast or groupcast or broadcast), and PDB.

According to one embodiment of the present disclosure, (Proposal 16) a common SL DRX configuration dedicated to UEs that have (or wish to have) a PC5 unicast connection (or PC5 RRC connection) is proposed. For example, each of required time to establish a PC5 unicast connection and use the service may be different for UEs using a VoIP service (e.g., a unicast service) and UEs using an autonomous driving service (e.g., a message transceiving service for swarm driving (broadcast cast service)). That is, the SL DRX configuration (e.g., DRX cycle or on-duration timer) used to receive messages exchanged before establishing a PC5 unicast connection (or PC5 RRC connection) may not need to be the same. For example, the DRX cycle or on-duration timer of a PC5 unicast specific common SL DRX configuration used for a service that requires a fast PC5 unicast connection (or PC5 RRC connection) may have a shorter value.

The PC5 unicast specific common SL DRX configuration proposed in this disclosure may be a common SL DRX configuration that can be used by UEs that have (or wish to have) all PC5 unicast connections (or PC5 RRC connections). Alternatively, the PC5 unicast specific common SL DRX configuration proposed in this disclosure may be a PC5 unicast connection (or, PC5 RRC connection) specific (i.e., limited to PC5 unicast connection with the same source L2 ID/destination L2 ID pair, or limited to UEs with PC5 RRC connection, or limited per direction of the source L2 ID/destination L2 ID pair (since the unicast communication is bidirectional, the SL DRX configuration applied at the receiving UE may have different values in different directions of the unicast communication.)) common SL DRX configuration.

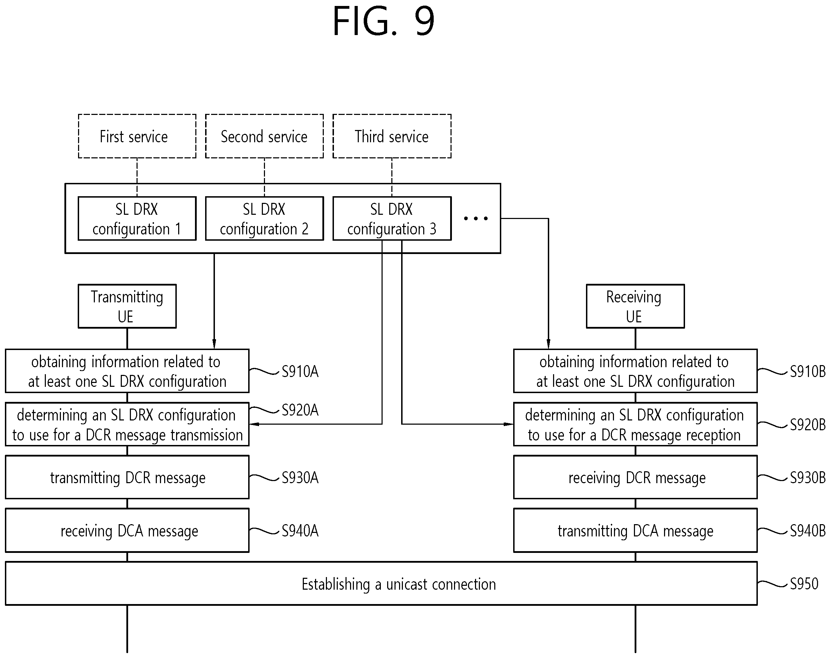

FIG. 9 shows a procedure for a transmitting UE and a receiving UE to establish a unicast connection, according to one embodiment of the present disclosure. The embodiment of FIG. 9 may be combined with various embodiments of the present disclosure.

Referring to FIG. 9, in step S910A, a transmitting UE may obtain information related to at least one SL DRX configuration. In step S910B, a receiving UE may obtain information related to at least one SL DRX configuration. Here, the information related to at least one SL DRX configuration may include at least one SL DRX configuration used to establish the unicast connection, related to a service to be performed in the unicast communication. For example, here, the at least one SL DRX configuration may each be in a mapping relationship with a related service. For example, in this embodiment, an SL DRX configuration that may be used in the procedure for establishing a unicast connection to perform the first service may be an SL DRX configuration 1. In this embodiment, it is assumed that the transmitting UE and the receiving UE establish a unicast connection to perform the third service.

In step S920A, a transmitting UE may determine which SL DRX configuration to use for a transmission of a DCR message. A transmitting UE may determine to use the SL DRX configuration 3 related to the third service for the transmission of the DCR message, since the establishment of a unicast connection is required to perform the third service. That is, for example, the transmitting UE may use the SL DRX configuration 3 in anticipation that at least one receiving UE interested in the third service will use the SL DRX configuration 3 for the reception of the DCR message, so that the at least one receiving UE can receive the DCR message in the active time of the SL DRX configuration 3. In step S920B, a receiving UE may determine to perform monitoring of a DCR message based on the SL DRX configuration 3 related to the third service, for establishment of a unicast connection related to the third service.

In step S930A, a transmitting UE may transmit a DCR message based on an active time in SL DRX configuration 3. In step S930B, a receiving UE that has been monitoring the DCR message based on the active time of the SL DRX configuration 3 may receive the DCR message.

In step S940B, a receiving UE may transmit a DCA message to a transmitting UE in response to the DCR message it has received, based on an active time of the SL DRX configuration 3. In step S940B, a transmitting UE may receive the DCA message, based on an active time of the SL DRX configuration 3. And, in step S950, a transmitting UE and a receiving UE may establish a unicast connection based on the DCA message.

According to one embodiment of the present disclosure, the PC5 unicast connection (or, PC5 RRC connection) specific common SL DRX configuration proposed in the present disclosure may be used for the following purposes.

For example, a PC5 unicast connection (or PC5 RRC connection) specific common SL DRX configuration may be used to transmit/receive messages exchanged between UEs (e.g., PC5-S direct communication request (DCR)/response (e.g., direct communication accept (DCA) message), other PC5-S messages exchanged to establish a PC5 unicast link, PC5 RRC messages exchanged for UE capability negotiation, PC5 RRC messages to perform PC5 RRC reset process, etc.) (or power saving UEs: UEs performing SL DRX operation) before establishing a PC5 unicast connection (or PC5 RRC connection).

For example, a common SL DRX configuration specific to a PC5 unicast connection (or PC5 RRC connection) may be used to transmit/receive messages exchanged between UEs before a power saving UE (the UE operating SL DRX) (e.g., PC5-S DCR/response, other PC5-S messages exchanged to establish a PC5 unicast link, PC5 RRC messages exchanged to negotiate UE capabilities, PC5 RRC messages to perform the PC5 RRC reconfiguration procedure, etc.) that has established a PC5 unicast connection (or PC5 RRC connection) establishes a new PC5 unicast connection (or PC5 RRC connection) with another UE.

Alternatively, for example, a PC5 unicast connection specific common SL DRX configuration proposed in this disclosure may be used as a common SL DRX configuration for the purpose of monitoring the PC5 RRC messages exchanged to establish the unicast SL DRX configuration.

For example, a UE with (or without) a PC5 unicast connection (or PC5 RRC connection) (power saving UE: UE performing SL DRX operation) may use a PC5 unicast connection (or PC5 RRC connection) specific common SL DRX configuration to monitor channels (e.g. PSCCH/PSSCH/PSFCH/PSBCH) or signaling (S-SSB) of other UEs.

Meanwhile, NR V2X in Release 16 did not support power saving operation of UEs, and power saving operation of UEs (e.g., power saving UEs) will be supported in Release 17 NR V2X.

In this disclosure, operation methods for a default DRX configuration and a service-specific DRX configuration in NR V2X are proposed. In the following description, "when, if, in case of" may be replaced by "based on".

According to one embodiment of the present disclosure, a default SL DRX configuration may be an SL DRX configuration used to monitor sidelink signaling before a unicast/groupcast/broadcast service is initiated.

For example, a common SL DRX configuration specific to the PC5 unicast connection (or PC5 RRC connection) may be used to transmit/receive messages exchanged between UEs (or power saving UEs: UEs performing SL DRX operation) (e.g., PC5-S DCR/response, other PC5-S messages exchanged to establish a PC5 unicast link, PC5 RRC messages exchanged to negotiate UE capabilities, PC5 RRC messages to perform the PC5 RRC reconfiguration procedure, etc.) before establishing a PC5 unicast connection (or PC5 RRC connection).

For example, a power saving UE (a UE operating SL DRX) that has established a PC5 unicast connection (or PC5 RRC connection) may use a common SL DRX configuration specific to the PC5 unicast connection (or PC5 RRC connection) to transmit/receive messages exchanged between UEs (e.g., PC5-S DCR/response, other PC5-S messages exchanged to establish a PC5 unicast link, PC5 RRC messages exchanged to negotiate UE capabilities, PC5 RRC messages to perform the PC5 RRC reconfiguration procedure, etc.) before establishing a new PC5 unicast connection (or PC5 RRC connection) with another UE.

Alternatively, for example, a default SL DRX configuration may be used as a common SL DRX configuration for the purpose of monitoring a PC5 RRC message exchanged to establish a unicast SL DRX configuration.

For example, a UE with (or without) a PC5 unicast connection (or PC5 RRC connection) (power saving UE: UE performing SL DRX operation) may use a common SL DRX configuration specific to the PC5 unicast connection (or PC5 RRC connection) to monitor a channel (e.g. PSCCH/PSSCH/PSFCH/PSBCH) or signal (S-SSB) of another UE.

For example, a default SL DRX configuration may be used as an SL DRX configuration to monitor messages for groupcast group formation.

For example, a default SL DRX configuration may be used as an SL DRX configuration to monitor sidelink signaling before transmitting/receiving groupcast service data (before groupcast service initiation).

For example, the default SL DRX configuration may be used as an SL DRX configuration to monitor sidelink signaling before transmitting/receiving broadcast service data (before broadcast service initiation).

According to one embodiment of the present disclosure, a service-specific SL DRX configuration may be used as the SL DRX configuration for transmitting/receiving each cast communication after initiation of a unicast/groupcast/broadcast service.

According to one embodiment of the present disclosure, a transmitting UE may reserve a resource for an initial transmission (or, retransmission) by selecting a resource from an interval of an on-duration timer, an inactivity timer, and a retransmission timer in operation of a service specific SL DRX configuration for transmitting service specific data (unicast service data/groupcast service data/broadcast service data).

Here, for example, if the PDB for the corresponding service cannot be satisfied when a transmitting UE selects a resource in the interval of the on-duration timer, inactivity timer, and retransmission timer in operation of a service specific SL DRX configuration for data transmission, the transmitting UE may check the interval of the on-duration timer, inactivity timer, and retransmission timer in operation of the default SL DRX configuration. And, if the PDB for the service can be satisfied when the transmitting UE selects a resource in that interval, the transmitting UE may transmit the sidelink service data (unicast/groupcast/broadcast) by selecting a resource not only from the interval of the on-duration timer, inactivity timer and retransmission timer in operation of the service specific SL DRX configuration, but also from the interval of the on-duration timer, inactivity timer and retransmission timer in operation of the default SL DRX configuration.

According to one embodiment of the present disclosure, a transmitting UE may reserve a resource for non-service data (e.g., PC-S messages, PC5 RRC messages for capability negotiation, PC5 RRC messages for PC5 RRC re-configuration, PC5 RRC messages for SL DRX configuration, and PC5 RRC messages for SL DRB addition/modification/deletion) by selecting a resource from the interval of the on-duration timer, inactivity timer, and retransmission timer in operation of the default SL DRX configuration to transmit the non-service data.

Here, for example, if an on-duration timer, inactivity timer, and retransmission timer in operation of a service specific SL DRX configuration exists at a time earlier than the interval of the on-duration timer, inactivity timer, and retransmission timer in operation of the default SL DRX configuration, a transmitting UE may select resources from the interval of the on-duration timer, inactivity timer, and retransmission timer in operation of the service specific SL DRX configuration to transmit the non-service data for faster non-service data transmission.

The default DRX configuration and service-specific DRX configuration proposed in this disclosure may be applicable to SL unicast as well as SL groupcast and SL broadcast.

The operation of the present disclosure may be applied/extended to SL DRX inactive timer operation as well as SL DRX retransmission timers (or SL DRX timers that cause active time to operate).

The SL DRX configuration referred to in this disclosure may include at least one or more of the following parameters.

**[Table 13]**

| | ● Sidelink DRX configurations |
|---|---|
| ✔ *SL drx-onDurationTimer: the duration at the beginning of a SL DRX Cycle;* | |
| ✔ *SL drx-SlotOffset: the delay before starting the sl drx-onDurationTimer;* | |
| ✔ *SL drx-InactivityTimer: the duration after the PSCCH occasion in which a PSCCH indicates a new SL transmission for the MAC entity;* | |
| ✔ *SL drx-StartOffset: the subframe where the SL DRX cycle start;* | |
| ✔ *SL drx-Cycle: the SL DRX cycle;* | |
| ✔ *SL drx-HARQ-RTT-Timer (per HARQ process or per sidelink process): the minimum duration before an assignment for HARQ retransmission is expected by the MAC entity.* | |
| ✔ *SL drx-RetransmissionTimer (per HARQ process or per sidelink process): the maximum duration until a retransmission is received.* | |

The following Uu DRX timers referenced in this disclosure may be used for the following purposes

drx-HARQ-RTT-TimerSL timer: may represent an interval where a transmitting UE (UE supporting Uu DRX operation) performing sidelink communication based on sidelink resource allocation mode 1 does not perform PDCCH (or, DCI) monitoring for sidelink mode 1 resource allocation from a base station.

drx-RetransmissionTimerSL timer: may indicate an interval during which a transmitting UE (UE supporting Uu DRX operation) performing sidelink communication based on sidelink resource allocation mode 1 performs PDCCH (or, DCI) monitoring for sidelink mode 1 resource allocation from a base station.

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active time by default to receive PSCCH/PSSCH from other UE. That is, an SL DRX on-duration timer may be extended by the SL DRX inactivity timer interval. Furthermore, when a UE receives a PSCCH for a new TB (first SCI and/or second SCI) or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which the counterpart UE transmits, until the expiration of an SL DRX HARQ RTT timer.

SL DRX retransmission timer: may indicate an interval of time during which a UE performing SL DRX operation is active time to receive retransmission packets (or PSSCH assignments) transmitted by other UE. For example, when an SL DRX HARQ RTT timer expires, an SL DRX retransmission timer may start. During this timer period, a UE may monitor a reception of retransmission sidelink packets (or PSSCH allocations) transmitted by other UE.

In addition, in the following description, the names of the timers (SL DRX On-Duration Timer, SL DRX Inactivity timer, SL HARQ RTT Timer, SL DRX Retransmission Timer, etc.) are exemplary, and timers that perform the same/similar functions based on what is described in each timer can be considered the same/similar timer regardless of the name.

The proposal in this disclosure is a solution that may also be applied and extended to address the problem of loss due to interruption in Uu bandwidth part (BWP) switching.

Furthermore, the proposal of the present disclosure is a solution that may also be applied and extended to address the problem of loss due to interruption caused by SL BWP switching, for example, when a UE supports SL multiple BWP.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations.

Furthermore, for example, an on-duration term referred to in the present disclosure may be extended to an active time interval, and an off-duration term may be extended to a sleep time interval. For example, an active time may refer to a period of time when a UE is operating in a wake up state (RF module is on) to receive/transmit radio signals. For example, sleep time may refer to an interval during which a UE operates in a sleep mode state (RF module is off) to conserve power. For example, a sleep period does not imply that a transmitting UE is obligated to operate in sleep mode, i.e., the UE may be allowed to operate in active time for a short period of time to perform a sensing operation/transmission operation if necessary, even during a sleep period.

Further, for example, whether (some of) the proposed schemes/rules of this disclosure apply and/or the related parameters (e.g., thresholds) may be configured specifically (or differently or independently) depending on the resource pool, congestion level, service priority (and/or type), QoS requirements (e.g., latency, reliability) or PQI, traffic type (e.g., (aperiodic) generation), SL transport resource allocation mode (Mode 1, Mode 2), etc.

For example, whether to apply the proposals of the present disclosure (and/or related parameter configuration value) may be configured specifically (and/or, independently and/or differently) for at least one of a resource pool (e.g., a resource pool where a PSFCH is configured, a resource pool where a PSFCH is not configured), service/packet type (and/or priority), QoS profile or QoS requirement (e.g., URLLC/EMBB traffic, reliability, latency), cast type (e.g., unicast, groupcast, broadcast), (resource pool) congestion level (e.g., CBR), SL HARQ feedback mode (e.g., NACK only feedback, ACK/NACK feedback), a HARQ feedback enabled MAC PDU (and/or a HARQ feedback disabled MAC PDU) transmission case, whether PUCCH based SL HARQ feedback reporting operation is configured, a case where pre-emption (and/or re-evaluation) (or, -based resource reselection) is performed, (L2 or L1) (source and/or destination) ID, (L2 or L1) (a combination of a source layer ID and a destination layer ID) identifier, (L2 or L1) (the direction (from a transmitting UE toward a receiving UE, or from a receiving UE toward a transmitting UE) of a pair of source layer ID and destination layer ID), (L2 or L1) (a combination of a pair of a source layer ID and an destination layer ID, and a cast type) identifier, a direction of a pair of a source layer ID and a destination layer ID, PC5 RRC connection/link, a case where an SL DRX is performed, SL mode type (resource allocation mode 1, resource allocation mode 2), a case where (a)periodic resource reservation is performed, a Tx profile (e.g., a TX profile indicating that it is a service where an SL DRX operation is supported, a Tx profile indicating that it is a service where an SL DRX operation is not needed to be supported).

For example, the term specific time as used in the present disclosure may refer to a predefined amount of time for a UE to receive sidelink signaling or sidelink data from another UE, or a period of time, or a specific timer (SL DRX retransmission timer, SL DRX inactivity timer, or a timer to ensure a receiving UE to operate as an active time in DRX operation) time, during which a UE is active.

Further, for example, whether the proposals and proposed rules in this disclosure apply (and/or the associated parameter configuration values) may also apply to mmWave SL operation.

According to an embodiment of the present disclosure, since a transmission and reception of DCR/DCA messages are performed based on an SL DRX configuration set for each service to be performed by establishing a unicast connection, an SL DRX operation that is most efficient for each service-specific feature (or situation) can be performed. Thus, the power saving effect and time efficiency of the unicast establishment operation can be increased.

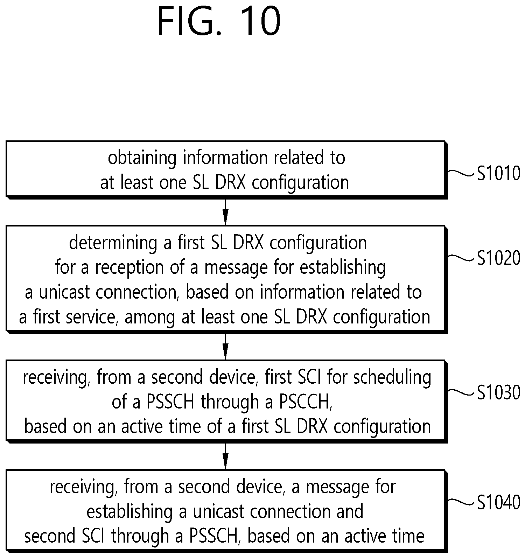

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device may obtain information related to at least one sidelink, SL, discontinuous reception, DRX, configuration. In step S1020, the first device may determine a first SL DRX configuration for a reception of a message for establishing a unicast connection, based on information related to a first service, among the at least one SL DRX configuration. In step S1030, the first device may receive, from a second device, first sidelink control information, SCI, for scheduling of a physical sidelink shared channel, PSSCH, through a physical sidelink control channel, PSCCH, based on an active time of the first SL DRX configuration. In step S1040, the first device may receive, from the second device, the message for establishing the unicast connection and second SCI through the PSSCH, based on the active time. For example, the at least one SL DRX configuration may be configured for each information related to a unicast service.

For example, the second SCI may include a cast type indicator, and the cast type indicator may represent broadcast.

For example, the second SCI may include a cast type indicator, and the cast type indicator may represent unicast.

For example, additionally, the first device may transmit, to the second device, a direct communication accept, DCA, message, as a response for the message for establishing the unicast connection; and establish the unicast connection with the second device, based on the transmission of the DCA message.

For example, additionally, the first device may receive, from the second device, the MAC PDU, based on the unicast connection.

For example, the message for establishing the unicast connection may include a direct communication request, DCR, message.

For example, the first SL DRX configuration may be configured for a direction of a pair of a source layer, L, 2 ID and a destination L2 ID.

For example, the source L2 ID may be related to the second device, and the destination L2 ID may be related to the first device.

For example, the first SL DRX configuration may be configured for a destination L2 ID related to the first service.

For example, the first service may be a service related to voice over internet protocol, VoIP.

For example, the first service may be a service related to autonomous driving.

For example, a second SL DRX configuration included in the at least one SL DRX configuration may be related to a plurality of services.

For example, the information related to the first service may include a PC5 5 quality indicator, PQI.

The above-described embodiments may be applied to various devices described below. First, a processor 102 of a first device 100 may obtain information related to at least one sidelink, SL, discontinuous reception, DRX, configuration. And, the processor 102 of the first device 100 may determine a first SL DRX configuration for a reception of a message for establishing a unicast connection, based on information related to a first service, among the at least one SL DRX configuration. And, the processor 102 of the first device 100 may control a transceiver 106 to receive, from a second device 200, first sidelink control information, SCI, for scheduling of a physical sidelink shared channel, PSSCH, through a physical sidelink control channel, PSCCH, based on an active time of the first SL DRX configuration. And, the processor 102 of the first device 100 may control the transceiver 106 to receive, from the second device 200, the message for establishing the unicast connection and second SCI through the PSSCH, based on the active time. For example, the at least one SL DRX configuration may be configured for each information related to a unicast service.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain information related to at least one sidelink, SL, discontinuous reception, DRX, configuration; determine a first SL DRX configuration for a reception of a message for establishing a unicast connection, based on information related to a first service, among the at least one SL DRX configuration; receive, from a second device, first sidelink control information, SCI, for scheduling of a physical sidelink shared channel, PSSCH, through a physical sidelink control channel, PSCCH, based on an active time of the first SL DRX configuration; and receive, from the second device, the message for establishing the unicast connection and second SCI through the PSSCH, based on the active time, wherein the at least one SL DRX configuration may be configured for each information related to a unicast service.

For example, the second SCI may include a cast type indicator, and the cast type indicator may represent broadcast.

For example, the second SCI may include a cast type indicator, and the cast type indicator may represent unicast.

For example, additionally, the first device may transmit, to the second device, a direct communication accept, DCA, message, as a response for the message for establishing the unicast connection; and establish the unicast connection with the second device, based on the transmission of the DCA message.

For example, additionally, the first device may receive, from the second device, the MAC PDU, based on the unicast connection.

For example, the message for establishing the unicast connection may include a direct communication request, DCR, message.

For example, the first SL DRX configuration may be configured for a direction of a pair of a source layer, L, 2 ID and a destination L2 ID.

For example, the source L2 ID may be related to the second device, and the destination L2 ID may be related to the first device.

For example, the first SL DRX configuration may be configured for a destination L2 ID related to the first service.

For example, the first service may be a service related to voice over internet protocol, VoIP.

For example, the first service may be a service related to autonomous driving.

For example, a second SL DRX configuration included in the at least one SL DRX configuration may be related to a plurality of services.

For example, the information related to the first service may include a PC5 5 quality indicator, PQI.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain information related to at least one sidelink, SL, discontinuous reception, DRX, configuration; determine a first SL DRX configuration for a reception of a message for establishing a unicast connection, based on information related to a first service, among the at least one SL DRX configuration; receive, from a second UE, first sidelink control information, SCI, for scheduling of a physical sidelink shared channel, PSSCH, through a physical sidelink control channel, PSCCH, based on an active time of the first SL DRX configuration; and receive, from the second UE, the message for establishing the unicast connection and second SCI through the PSSCH, based on the active time, wherein the at least one SL DRX configuration may be configured for each information related to a unicast service.

According to an embodiment of the present disclosure, a non-transitory computer-readable storage medium storing instructions may be proposed. For example, the instructions, when executed, may cause a first device to: obtain information related to at least one sidelink, SL, discontinuous reception, DRX, configuration; determine a first SL DRX configuration for a reception of a message for establishing a unicast connection, based on information related to a first service, among the at least one SL DRX configuration; receive, from a second device, first sidelink control information, SCI, for scheduling of a physical sidelink shared channel, PSSCH, through a physical sidelink control channel, PSCCH, based on an active time of the first SL DRX configuration; and receive, from the second device, the message for establishing the unicast connection and second SCI through the PSSCH, based on the active time, wherein the at least one SL DRX configuration may be configured for each information related to a unicast service.

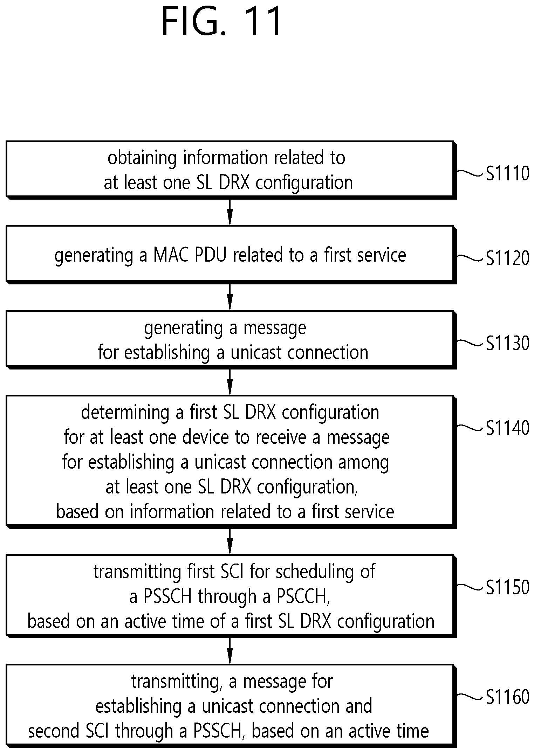

FIG. 11 shows a procedure for a second device to perform wireless communication, according to one embodiment of the present disclosure. The embodiment of FIG. 11 may be combined with various embodiments of the present disclosure.

Referring to FIG. 11, in step 51110, a second device may obtain information related to at least one sidelink, SL, discontinuous reception, DRX, configuration. In step S1120, the second device may generate a medium access control, MAC, protocol data unit, PDU, related to a first service. In step S1130, the second device may generate a message for establishing a unicast connection. In step S1140, the second device may determine a first SL DRX configuration for at least one device to receive the message for establishing the unicast connection among the at least one SL DRX configuration, based on information related to the first service. In step S1150, the second device may transmit first sidelink control information, SCI, for scheduling of a physical sidelink shared channel, PSSCH, through a physical sidelink control channel, PSCCH, based on an active time of the first SL DRX configuration. In step S1 160, the second device may transmit, the message for establishing the unicast connection and second SCI through the PSSCH, based on the active time. For example, the at least one SL DRX configuration may be configured for each information related to a unicast service.

For example, additionally, the second device may receive, from a first device included in the at least one device, a direct communication accept, DCA, message; and establish the unicast connection with the first device, based on the reception of the DCA message. For example, the first SCI, the message for establishing the unicast connection, and the second SCI may be received to the first device, and the message for establishing the unicast connection may include a direct communication request, DCR, message.

The above-described embodiments may be applied to various devices described below. First, a processor 202 of a second device 200 may obtain information related to at least one sidelink, SL, discontinuous reception, DRX, configuration. And, the processor 202 of the second device 200 may generate a medium access control, MAC, protocol data unit, PDU, related to a first service. And, the processor 202 of the second device 200 may generate a message for establishing a unicast connection. And, the processor 202 of the second device 200 may determine a first SL DRX configuration for at least one device to receive the message for establishing the unicast connection among the at least one SL DRX configuration, based on information related to the first service. And, the processor 202 of the second device 200 may control a transceiver 206 to transmit first sidelink control information, SCI, for scheduling of a physical sidelink shared channel, PSSCH, through a physical sidelink control channel, PSCCH, based on an active time of the first SL DRX configuration. And, the processor 202 of the second device 200 may control the transceiver 206 to transmit, the message for establishing the unicast connection and second SCI through the PSSCH, based on the active time. For example, the at least one SL DRX configuration may be configured for each information related to a unicast service.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain information related to at least one sidelink, SL, discontinuous reception, DRX, configuration; generate a medium access control, MAC, protocol data unit, PDU, related to a first service; generate a message for establishing a unicast connection; determine a first SL DRX configuration for at least one device to receive the message for establishing the unicast connection among the at least one SL DRX configuration, based on information related to the first service; transmit first sidelink control information, SCI, for scheduling of a physical sidelink shared channel, PSSCH, through a physical sidelink control channel, PSCCH, based on an active time of the first SL DRX configuration; and transmit, the message for establishing the unicast connection and second SCI through the PSSCH, based on the active time, wherein the at least one SL DRX configuration may be configured for each information related to a unicast service.

For example, the one or more processors may execute the instructions to: receive, from a first device included in the at least one device, a direct communication accept, DCA, message; and establish the unicast connection with the first device, based on the reception of the DCA message. For example, the first SCI, the message for establishing the unicast connection, and the second SCI may be received to the first device, and the message for establishing the unicast connection may include a direct communication request, DCR, message.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

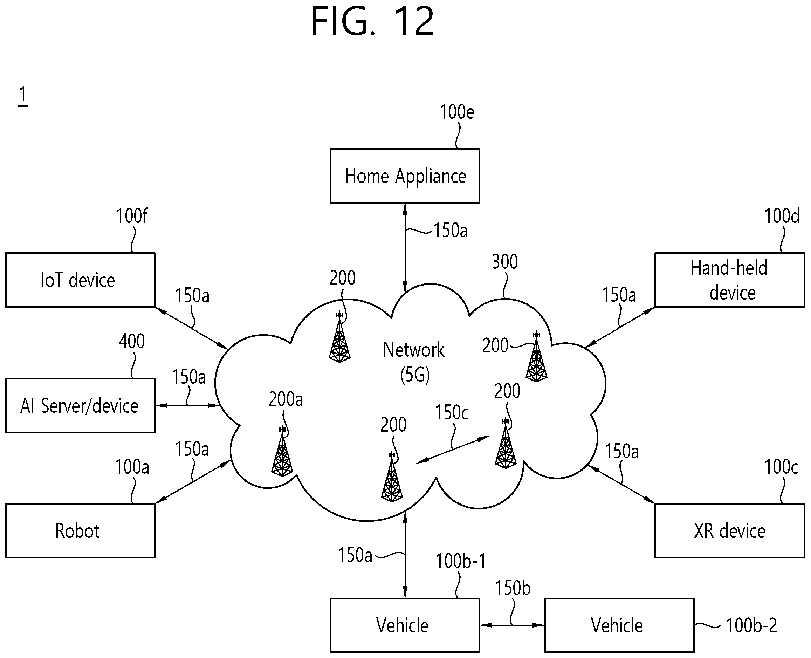

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

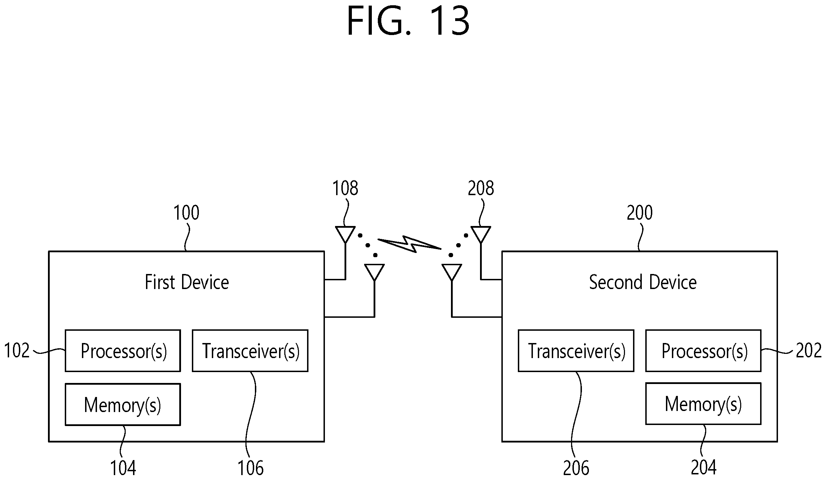

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

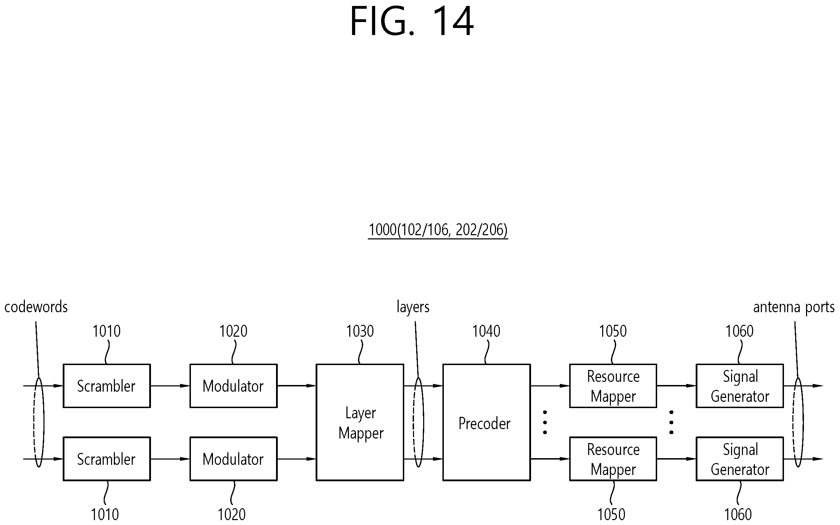

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

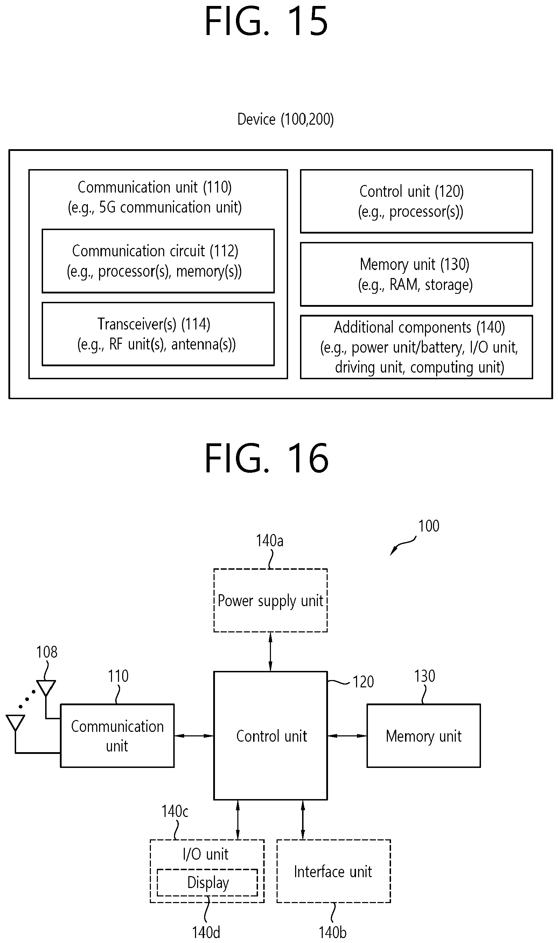

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

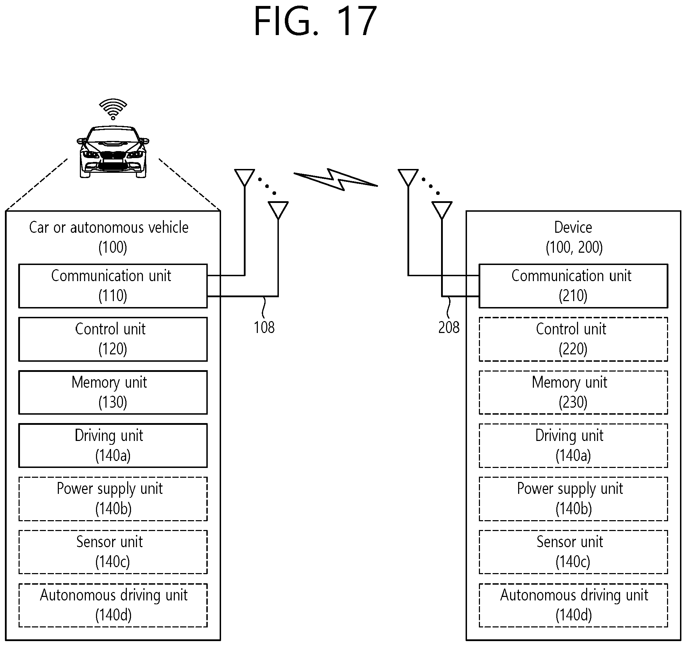

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
obtaining information related to at least one sidelink, SL, discontinuous reception, DRX, configuration;
determining a first SL DRX configuration for a reception of a message for establishing a unicast connection, based on information related to a first service, among the at least one SL DRX configuration;
receiving, from a second device, first sidelink control information, SCI, for scheduling of a physical sidelink shared channel, PSSCH, through a physical sidelink control channel, PSCCH, based on an active time of the first SL DRX configuration; and
receiving, from the second device, the message for establishing the unicast connection and second SCI through the PSSCH, based on the active time,
wherein the at least one SL DRX configuration is configured for each information related to a unicast service.

2. The method of claim 1, wherein the second SCI includes a cast type indicator, and
wherein the cast type indicator represents broadcast.

3. The method of claim 1, wherein the second SCI includes a cast type indicator, and
wherein the cast type indicator represents unicast.

4. The method of claim 1, further comprising:
transmitting, to the second device, a direct communication accept, DCA, message, as a response for the message for establishing the unicast connection; and
establishing the unicast connection with the second device, based on the transmission of the DCA message.

5. The method of claim 4, further comprising:
receiving, from the second device, the MAC PDU, based on the unicast connection.

6. The method of claim 1, wherein the message for establishing the unicast connection includes a direct communication request, DCR, message.

7. The method of claim 1, wherein the first SL DRX configuration is configured for a direction of a pair of a source layer, L, 2 ID and a destination L2 ID.

8. The method of claim 7, wherein the source L2 ID is related to the second device, and
wherein the destination L2 ID is related to the first device.

9. The method of claim 1, wherein the first SL DRX configuration is configured for a destination L2 ID related to the first service.

10. The method of claim 1, wherein the first service is a service related to voice over internet protocol, VoIP.

11. The method of claim 1, wherein the first service is a service related to autonomous driving.

12. The method of claim 1, wherein a second SL DRX configuration included in the at least one SL DRX configuration is related to a plurality of services.

13. The method of claim 1, wherein the information related to the first service includes a PC5 5 quality indicator, PQI.

14. A first device for performing wireless communication, the first device comprising:
one or more memories storing instructions;
one or more transceivers; and
one or more processors connected to the one or more memories and the one or more transceivers, wherein the one or more processors execute the instructions to:
obtain information related to at least one sidelink, SL, discontinuous reception, DRX, configuration;
determine a first SL DRX configuration for a reception of a message for establishing a unicast connection, based on information related to a first service, among the at least one SL DRX configuration;
receive, from a second device, first sidelink control information, SCI, for scheduling of a physical sidelink shared channel, PSSCH, through a physical sidelink control channel, PSCCH, based on an active time of the first SL DRX configuration; and
receive, from the second device, the message for establishing the unicast connection and second SCI through the PSSCH, based on the active time,
wherein the at least one SL DRX configuration is configured for each information related to a unicast service.

15. A device adapted to control a first user equipment, UE, the device comprising:
one or more processors; and
one or more memories operably connectable to the one or more processors and storing instructions, wherein the one or more processors execute the instructions to:
obtain information related to at least one sidelink, SL, discontinuous reception, DRX, configuration;
determine a first SL DRX configuration for a reception of a message for establishing a unicast connection, based on information related to a first service, among the at least one SL DRX configuration;
receive, from a second UE, first sidelink control information, SCI, for scheduling of a physical sidelink shared channel, PSSCH, through a physical sidelink control channel, PSCCH, based on an active time of the first SL DRX configuration; and
receive, from the second UE, the message for establishing the unicast connection and second SCI through the PSSCH, based on the active time,
wherein the at least one SL DRX configuration is configured for each information related to a unicast service.

16. A non-transitory computer-readable storage medium storing instructions that, when executed, cause a first device to:
obtain information related to at least one sidelink, SL, discontinuous reception, DRX, configuration;
determine a first SL DRX configuration for a reception of a message for establishing a unicast connection, based on information related to a first service, among the at least one SL DRX configuration;
receive, from a second device, first sidelink control information, SCI, for scheduling of a physical sidelink shared channel, PSSCH, through a physical sidelink control channel, PSCCH, based on an active time of the first SL DRX configuration; and
receive, from the second device, the message for establishing the unicast connection and second SCI through the PSSCH, based on the active time,
wherein the at least one SL DRX configuration is configured for each information related to a unicast service.

17. A method for performing, by a second device, wireless communication, the method comprising:
obtaining information related to at least one sidelink, SL, discontinuous reception, DRX, configuration;
generating a medium access control, MAC, protocol data unit, PDU, related to a first service;
generating a message for establishing a unicast connection;
determining a first SL DRX configuration for at least one device to receive the message for establishing the unicast connection among the at least one SL DRX configuration, based on information related to the first service;
transmitting first sidelink control information, SCI, for scheduling of a physical sidelink shared channel, PSSCH, through a physical sidelink control channel, PSCCH, based on an active time of the first SL DRX configuration; and
transmitting, the message for establishing the unicast connection and second SCI through the PSSCH, based on the active time,
wherein the at least one SL DRX configuration is configured for each information related to a unicast service.

18. The method of claim 17, further comprising:
receiving, from a first device included in the at least one device, a direct communication accept, DCA, message; and
establishing the unicast connection with the first device, based on the reception of the DCA message,
wherein the first SCI, the message for establishing the unicast connection, and the second SCI are received to the first device, and
wherein the message for establishing the unicast connection includes a direct communication request, DCR, message.

19. A second device for performing wireless communication, the second device comprising:
one or more memories storing instructions;
one or more transceivers; and
one or more processors connected to the one or more memories and the one or more transceivers, wherein the one or more processors execute the instructions to:
obtain information related to at least one sidelink, SL, discontinuous reception, DRX, configuration;
generate a medium access control, MAC, protocol data unit, PDU, related to a first service;
generate a message for establishing a unicast connection;
determine a first SL DRX configuration for at least one device to receive the message for establishing the unicast connection among the at least one SL DRX configuration, based on information related to the first service;
transmit first sidelink control information, SCI, for scheduling of a physical sidelink shared channel, PSSCH, through a physical sidelink control channel, PSCCH, based on an active time of the first SL DRX configuration; and
transmit, the message for establishing the unicast connection and second SCI through the PSSCH, based on the active time,
wherein the at least one SL DRX configuration is configured for each information related to a unicast service.

20. The second device of claim 19, wherein the one or more processors execute the instructions to:
receive, from a first device included in the at least one device, a direct communication accept, DCA, message; and
establish the unicast connection with the first device, based on the reception of the DCA message,
wherein the first SCI, the message for establishing the unicast connection, and the second SCI are received to the first device, and
wherein the message for establishing the unicast connection includes a direct communication request, DCR, message.
